# Europäisches Patentamt

# European Patent Office

# Office européen des brevets

(19)

(11) Veröffentlichungsnummer: **0 193 890**
**B1**

(12) **EUROPÄISCHE PATENTSCHRIFT**

(45) Veröffentlichungstag der Patentschrift:
**14.09.88**

(51) Int. Cl.⁴: **B 27 K 3/34**

(21) Anmeldenummer: **86102615.1**

(22) Anmeldetag: **28.02.86**

(54) **Holzschutzmittel.**

(30) Priorität: **02.03.85 DE 3507420**

(43) Veröffentlichungstag der Anmeldung:
**10.09.86 Patentblatt 86/37**

(45) Bekanntmachung des Hinweises auf die Patenterteilung:
**14.09.88 Patentblatt 88/37**

(84) Benannte Vertragsstaaten:
**AT BE CH DE FR GB IT LI NL SE**

(56) Entgegenhaltungen:
**EP - A - 0 066 196**
**EP - A - 0 129 211**
**EP - A - 0 135 112**

**CHEMICAL ABSTRACTS, Band 95, Nr. 8, 24. August 1981, Seite 92, Nr. 63932n, Columbus, Ohio, US; A. SUJAN et al.: "Some studies on fungal deterioration of rubber wood (Hevea brasiliensis)", & MEDED. FAC. LANDBOUWWET., RIJKSUNIV. GENT 1980, 45(5), 1255-60**
**PESTICIDE SCIENCE, Band 15, Nr. 3, Juni 1984, Seiten 285-295, Oxford, GB; E.-H. POMMER: "Chemical structure-fungicidal activity relationships in substituted morpholines"**

(73) Patentinhaber: **BASF Aktiengesellschaft,
Carl-Bosch-Strasse 38, D-6700 Ludwigshafen (DE)**

(72) Erfinder: **Reuther, Wolfgang, Dr., Am Pferchelhang 16,
D-6900 Heidelberg (DE)**
Erfinder: **Sommer, Horst, Leuschnerstrasse 46,
D-6700 Ludwigshafen (DE)**
Erfinder: **Mangold, Dietrich, Dr.,
Hermann-Walker-Strasse 49, D-6903 Neckargemuend
(DE)**
Erfinder: **Pommer, Ernst-Heinrich, Dr., Berliner Platz 7,
D-6703 Limburgerhof (DE)**
Erfinder: **Borck, Hans-Volker, Im Kastanienwald 8,
D-7570 Baden-Baden (DE)**

**Beschreibung**

Die vorliegende Erfindung betrifft ein Verfahren zur Bekämpfung von holzschädigenden Pilzen mit einem Holzschutzmittel, das N-Tridecyl-2,6-dimethylmorpholin als Wirkstoff enthält.

Es ist aus DE 1 164 152 bekannt, substituierte Morpholinderivate in der Landwirtschaft zur Bekämpfung phytopathogener Pilze zu verwenden. Ein Schwerpunkt der Verwendung dieser Wirkstoffe, insbesondere des N-Tridecyl-2,6-dimethylmorpholins (Tridemorph) liegt dabei im Getreide in der Bekämpfung echter Mehltaupilze, die zur Pilzklasse der Ascomyceten gehören, Getreiderostpilze, wie Gertstenzwergrost oder Weizenbraunrost, die der Pilzklasse der basidiomyceten zuzuordnen sind, werden durch Tridemorph nicht bekämpft.

Es ist ferner bekannt, N-Tridecyl-2,6-trans-dimethyl-morpholin zur Bekämpfung holzzerstörender Pilze wie Coniophora und Polystictus zu verwenden (EP 129 211). Es ist auch bekannt, lebende Gummibäume mit Tridemorph zu behandeln (C.A. 95, 92, Nr. 63 932 n) oder Tridemorph in Form einer wässrigen Lösung, die ein 1,3-Butadienpolymerisat als Lösungsvermittler enthält, als Holzschutzmittel zu verwenden (EP-A-0 135 112). Hierdurch wird das erfindungsgemässe Verfahren nicht nahegelegt.

Es wurde nun überraschend gefunden, dass N-Tridecyl-2,6-dimethylmorpholin ausser in Form einer wässrigen Lösung, die ein 1,3-Butadienpolymerisat als Lösungsvermittler enthält, im Vergleich mit dem N-Tridecyl-2,6-trans-dimethylmorpholin eine wesentlich bessere Wirksamkeit gegen solche Pilze aufweist, die Holz, insbesondere nicht mehr lebendes Holz, ausser Holz von Gummibäumen befallen und zerstören. Folgende holzzerstörende Pilze (Basidiomyceten) lassen sich beispielsweise mit dem erfindungsgemässen Holzschutzmittel bekämpfen: Merulius lacrimans, Coniophora puteana, Lentinus lepideus, Lenzites trabea, Polystictus versicolor, Poria vaporaria.

Nicht mehr lebendes (totes) Holz, ausser Holz von Gummibäumen, ist beispielsweise Schnittholz, Bauholz, Holzwerkstoffe, z.B. Spanplatten, Holzspäne. Unter N-Tridecyl-2,6-dimethylmorpholin ist sowohl der Wirkstoff selbst als auch seine Salze mit anorganischen oder organischen Säuren, z.B. Salze mit Fluorwasserstoffsäure, Salzsäure, Bromwasserstoffsäure, Schwefelsäure, Essigsäure, Propionsäure, zu verstehen.

Der Wirkstoff kann in Zubereitungen, wie Lösungen ausser in Form einer wässrigen Lösung, die ein 1,3-Butadienpolymerisat als Lösungsvermittler enthält, Emulsionen, Pasten, Anstrichmittel (z.B. Anstrichfarben, Beizen) und Öldispersionen, angewendet werden. Die Zubereitungen enthalten im allgem. zwischen 0,1 und 90 Gew.% Wirkstoff, vorzugsweise 0,25 bis 50%. Die Aufwandmengen betragen je nach Art des gewünschten Effektes 0,5 bis 8 g Wirkstoff je m² zu schützender Holzoberfläche bzw. 50 bis 4000 g Wirkstoff je m³ Holz. Anstrichmittel enthalten beispielsweise 0,5 bis 4 Gew.-% Wirkstoff. Zum Schutz von Holzwerkstoffen können die Wirkstoffe als Emulsion dem Bindemittel beispielsweise in Mengen von 2 bis 6 Gew.-% zugesetzt werden.

Die Anwendung des Wirkstoffs erfolgt in üblicher Weise, z.B. durch Streichen, Spritzen, Sprühen, Tauchen oder Druckimprägnierungs- oder Diffusionsverfahren.

Die folgenden Beispiele sollen die Erfindung erläutern (Prozentangaben in Gew.-%).

**Beispiel 1**
Holzschutzgrundierung farblos
2,00% Tridemorph
0,10% Pemethrin
0,50% Dichlofluanid
6,00% Leinöl
91,40% Testbenzin (Kp 180–220 °C)

**Beispiel 2**
Holzschutzlasur, farbig
1,00% Tridemorph
0,10% Permethrin
0,50% Dichlofluanid
15,00% Alkydharz
3,00% Butylglykol
3,00% Eisenoxidpigment
0,20% Siccativ
77,20% Testbenzin (Kp 180–220 °C)

**Beispiel 3**
Vakuumimprägnieröl
2,00% Tridemorph
0,50% Dichlofluanid
3,00% Dibutylphthalat
94,50% Testbenzin (Kp 180–220 °C)

**Beispiel 4**
Holzschutzgrundierung, wasserverdünnt
2,00% Tridemorph
3,00% Dimethylalkylbenzylammoniumchlorid
1,00% Anlagerungsprodukt von Ethylenoxid (EO) an Nonylphenol (etwa 10 Mol je Mol Phenol)
3,00% Essigsäure
5,00% Propylenglykol
86,00% Wasser

Zur Vergrösserung des Wirkungsspektrums oder zur Erzielung besonderer Effekte können die Wirkstoffe mit anderen Wirkstoffen kombiniert werden. Als besonders günstig sind Mischungen mit folgenden Verbindungen anzusehen.
Organozinnverbindungen, wie Tributylzinnoxid und Tributylzinnbenzoat
Methylenbisthiocyanat
Dimethylalkylaminsalze
Dimethyldialkylammonium-chloride
Dimethylalkylbenzylammonium-chloride
Trimethylalkylammonium-chloride
Dimethylbipyridinium-chlorid
Cetylpyridinium-chlorid
Chlorierte Phenole, wie Tetra- und Pentachlorphenol
Tetrachlorisophthalsäure-dinitril
2-Halogenbenzoesäureanilid

N-Cyclohexyl-N-methoxy-2,5-dimethyl-furan-3-carbonsäureamid
N,N-Dimethyl-N'-phenyl-(N-fluordichlormethylthio)-sulfamid
N,N-Dimethyl-N'-tolyl-(N-fluordichlormethylthio)-sulfamid
Benzimidazol-2-carbaminsäure-methylester
2-Thiocyanomethyl-thiobenzothiazol
Kupfernaphthenat
Kupfer-8-oxychinolin
Alkali- und Metallsalze des N'-Hydroxy-N-cyclohexyl-diazeniumoxids
1-(1',2',4'-Triazolyl-1')-[1-(4'-chlorphenoxy)]-3,3-dimethylbutan-2-on
1-(1',2',4'-Triazolyl-1')-[1-(4'-chlorphenoxy)]-3,3-dimethylbutan-2-ol
N-[3-(p-tert.-Butylphenyl)-2-methyl-propyl]-cis-2,6-dimethylmorpholin
Hexachlorcyclohexan
O,O-Diethyl-o-(α-cyanbenzyliden-amino)-thiophosphat
O,O-Diethyl-o-3,5,6-trichlor-2-pyridil-thiono-phosphat
O,O-Diethyl-dithio-phosphoryl-methyl-6-chlor-benzoxazolon
2-i-Propoxyphenyl-N-methyl-carbamat
N-Methyl-1-naphthyl-carbamat
Norbornen-dimethanolhexa-chlorcyclosulfit
1-(4-Chlorphenyl)-3-(2,6-di-fluorbenzoyl)-harnstoff
1-[2-(2,4-Dichlorphenyl)-1,3-dioxolan-2-yl-ethyl]-1H-1,2,4-triazol
1-[2-(2,4-Dichlorphenyl)-4-ethyl-1,3-dioxolan-2-yl-ethyl]-1H-1,2,4-triazol
1-[2-(2,4-Dichlorphenyl)-4-n-propyl-1,3-dioxolan-2-yl-ethyl]-1H-1,2,4-triazol

Synthetische Pyrethroide, wie
(±)-3-(2,2-Dichlorvinyl-2,2-dimethyl)-cyclopropan-1-carbonsäure-3-phenoxy-benzylester
3-(2,2-Dichlorvinyl-2,2-dimethyl)-cyclopropan-1-carbonsäure-α-cyano-3-phenoxybenzylester
3-(2,2-Dibromvinyl-2,2-dimethyl)-α-cyano-m-phenoxybenzyl(1R,3R)-cyclopropan-carboxylat
α-Cyano-3-phenoxybenzyl-isopropyl-2,4-chlorphenylacetat

Beispiel 5
Zur Herstellung eines öligen Holzschutzmittels mit 1% Wirkstoff wird zunächst 1 Teil (Gewichtsteil) des Wirkstoffs unter leichtem Erwärmen in 55 Teilen einer aromatenreichen Benzinfraktion gelöst. Anschliessend werden 10 Teile eines Alkydharzes zugefügt und bei Raumtemperatur mit Testbenzin auf 100 Teile ergänzt.
Zur Herstellung wasserabweisender Imprägnieranstriche können den öligen Holzschutzmitteln sog. «water repellents» zugesetzt werden. Geeignete Substanzen sind beispielsweise Zinkstearat, Aluminiumstearat, Wachse.
Ferner können zur Erzielung von Farbeffekten feinteilige anorganische oder organische Pigmente oder öllösliche Farbstoffe in die Formulierungen eingearbeitet werden.
Zum Schutz des Holzes gegen Pilzbefall werden üblicherweise 50 bis 200 ml der in Beispiel 5 angeführten öligen Holzschutzmittel je m$^2$ Holzoberfläche durch Streichen, Spritzen oder Tauchen aufgebracht.

Anwendungsbeispiel 1
Tridemorph wird in Aceton gelöst, in Mengen von 100, abgestuft bis 3 ppm, einem 5%igen Malzextraktagar zugesetzt. Der Agar wird in Petrischalen gegossen und nach dem Erstarren werden die fungizidhaltigen Nähragarplatten getrennt mit dem Myzel der holzzerstörenden Pilze Merulius lacrimans (echter Hausschwamm), Coniophora puteana (Kellerschwamm), Lenzites trabea, Polystictus versicolor und Poria vaporaria beimpft. Nach fünftägiger Bebrütung der Schalen bei 25 °C wird die Entwicklung der Pilzkolonien auf dem Nährboden im Vergleich mit N-Tridecyl-2,6-dimethylmorpholin (A) und der Kontrolle (ohne Fungizid-Zusatz) beurteilt.
0 = kein Pilzwachstum (Pilzmyzel abgetötet)
1 = geringes Pilzwachstum (bis ⅓ der Agaroberfläche bewachsen)
2 = mittleres Pilzwachstum (bis 2/3 der Agaroberfläche bewachsen)
5 = ungehemmtes Pilzwachstum (gesamte Agaroberfläche bewachsen)

| Testpilz | ...ppm Tridemorph-Zusatz zum Nähragar | | | | | | |
| --- | --- | --- | --- | --- | --- | --- | --- |
| | 100 | 50 | 25 | 12 | 6 | 3 | 0(Kontrolle) |
| Merulius lacrimans | 0 | 0 | 0 | 0 | 1 | 1 | 5 |
| Coniophora puteana | 1 | 1 | 1 | 1 | 3 | 3 | 5 |
| Lenzites trabea | 0 | 0 | 0 | 0 | 0 | 1 | 5 |
| Polystictus versicolor | 0 | 0 | 0 | 1 | 1 | 3 | 5 |
| Poria vaporaria | 0 | 0 | 0 | 0 | 0 | 0 | 5 |

| Testpilz | ...ppm Zusatz des Wirkstoffes A zum Nähragar | | | | | | |
| --- | --- | --- | --- | --- | --- | --- | --- |
| | 100 | 50 | 25 | 12 | 6 | 3 | 0(Kontrolle) |
| Merulius lacrimans | 0 | 0 | 0 | 5 | 5 | 5 | 5 |
| Coniophora puteana | 3 | 3 | 3 | 5 | 5 | 5 | 5 |
| Polystictus versicolor | 0 | 1 | 2 | 4 | 5 | 5 | 5 |

Anwendungsbeispiel 2

Folgende Grenzwerte, d. h. die zum Schutz von 1 m³ Holz erforderliche Menge des Wirkstoffs Tridemorph, wurden nach vorausgegangener Auswaschung mit Wasser ermittelt.

| Pilz | Grenzwert kg Wirkstoff/m³ Kiefernholz |
|---|---|
| Coniophora puteana | 1,4–2,2 |
| Poria monticola | 0,5 |
| Lenzites trabea | 0,5 |
| Coriolus versicolor | 1,0–1,6 |

## Patentanspruch

1. Verfahren zur Bekämpfung von Pilzen, die Holz schädigen, dadurch gekennzeichnet, dass man die Pilze oder das von Pilzbefall bedrohte Holz, ausser Holz von Gummibäumen, mit N-Tridecyl-2,6-dimethylmorpholin behandelt, ausser in Form einer wässrigen Lösung, die ein 1,3-Butadienpolymerisat als Lösungsmittel enthält.

## Claim

A method of controlling fungi which damage wood, wherein the fungi, or the wood threatened by fungal infestation, excluding wood from rubber trees, is treated with N-tridecyl-2,6-dimethylmorpholine, except in the form of an aqueous solution which contains a 1,3-butadiene polymer as a solubilizer.

## Revendication

Procédé de lutte contre les champignons attaquant le bois, caractérisé en ce que l'on traite les champignons ou le bois risquant d'être attaqué par des champignons, à l'exception du bois de caoutchoutiers, par la N-tridécyl-2,6-diméthyl-morpholine, à l'exception de celle-ci sous forme d'une solution aqueuse contenant un polymère de butadiène-1,3 comme agent de solubilisation.